# EUROPEAN PATENT SPECIFICATION

(11) **EP 3 451 305 B1**
(45) Date of publication and mention of the grant of the patent: **20.07.2022**
(21) Application number: 18190713.0
(22) Date of filing: 24.08.2018
(51) Int. Cl.: G08B 17/00, G08B 25/10, H04W 52/02, G08B 29/18

(54) **COMMUNICATIONS DEVICE, COMMUNICATIONS SUBSYSTEM, AND COMMUNICATIONS SYSTEM**
KOMMUNIKATIONSVORRICHTUNG, KOMMUNIKATIONSUNTERSYSTEM UND KOMMUNIKATIONSSYSTEM
DISPOSITIF DE COMMUNICATIONS, SOUS-SYSTÈME DE COMMUNICATIONS ET SYSTÈME DE COMMUNICATIONS

(30) Priority: 01.09.2017 JP 2017169010
(43) Date of publication of application: 06.03.2019
(73) Proprietor: Panasonic Intellectual Property Management Co., Ltd., Osaka-shi, Osaka 540-6207 (JP)
(72) Inventor: HARADA, Kenji, Osaka 540-6207 (JP)
(74) Representative: Appelt, Christian W.

(56) References cited:
- EP-A1- 2 360 980
- EP-A1- 3 086 606
- WO-A1-2008/088079

## Description

### Technical Field

The present disclosure generally relates to communications devices, communications subsystems, and communications systems, and more particularly relates to a communications device configured to perform intermittent reception, and a communications subsystem and communications system including such a communications device.

### Background Art

A fire alarm system (communications system) has been known in the art which includes plurality of fire sensors (communications devices) for detecting the outbreak of a fire and a receiver (first device or master device) for performing wireless communication with the fire sensors via radio waves (see, for example, JP 2006-343983 A).

In the fire alarm system disclosed in JP 2006-343983 A, each of the fire sensors includes a sensing unit, a wireless transmission and reception unit, and a control unit. The sensing unit detects the outbreak of a fire by detecting a variation in temperature or smoke involved with a fire. The wireless transmission and reception unit transmits and receives a wireless signal to/from the receiver. The control unit controls the wireless transmission and reception unit at least when a fire is detected by the sensing unit, thereby having fire detection information transmitted as a wireless signal.

The receiver includes a wireless transmission and reception unit and a control unit. The wireless transmission and reception unit transmits and receives a wireless signal to/from the fire sensors. The control unit controls the wireless transmission and reception unit and obtains fire detection information from the wireless signal received at the wireless transmission and reception unit.

If each communications device (fire sensor) is configured to be able to communicate with not only the first device (i.e., the receiver) but also a second device (i.e., another fire sensor), which is different from the first device, then the timing to communicate with the first device and the timing to communicate with the second device could overlap with each other, or be too close to each other to say the least, on the time axis. In that case, communication with the first device could delay the communications device's communication with the second device.

WO 2008/088079 A1 discloses a power saving wireless fire alarm system having a master station and a plurality of battery-powered fire detecting terminals linked for wireless communication with each other. Upon detection of a fire occurrence at one of the fire detecting terminals, the fire detecting terminal transmit a fire detection message to a master station which in turn transmit a wake-up message to the other fire detecting terminals and thereafter a fire information message which starts a multiple synchronous communication between the master station and the fire detecting terminals. Each fire detecting terminal has a power controller which selects an intermittent reception mode of activating its own receiver only intermittently until receiving the wake-up message or information indicative of the fire occurrence, and select a constant operation mode thereafter to make the fire detecting terminals be ready for the multiple synchronous communication commenced by the fire information message from the master station.

### Summary

In view of the foregoing background, it is therefore an object of the present disclosure to provide a communications device, communications subsystem, and communications system, all of which are configured to reduce the chances of communication with the first device causing a delay in communication with the second device.

The object of the present disclosure is solved by the independent claim. . Advantageous embodiments are described by the dependent claims.

A communications device according to an aspect of the present disclosure includes a communications unit configured to perform transmission of a signal to a first device and one type of intermittent reception of intermittently carrying out a reception operation of receiving a signal from a second device. The communications unit puts, when a timing to transmit the signal to the first device falls within a protection period defined with respect to a timing to carry out the reception operation, the transmission of the signal to the first device on hold.

A communications subsystem according to another aspect of the present disclosure includes a plurality of the communications devices. Each of the plurality of communications devices communicates with another one, serving as the second device, of the communications devices.

A communications system according to still another aspect of the present disclosure includes the communications subsystem and a master device serving as the first device.

### Brief Description of Drawings

FIG. 1 is a block diagram of communications subsystems and communications system, each including communications devices according to an embodiment of the present disclosure;
FIG. 2 illustrates a first exemplary operation of the communications system;
FIG. 3 illustrates a second exemplary operation of the communications system;
FIG. 4 is a block diagram of communications subsystems and communications system, each including communications devices according to a variation of the embodiment of the present disclosure;
FIG. 5 is a timing diagram showing how the communications devices communicate with each other; and
FIG. 6 is a flowchart showing how the communications devices operate.

### Description of Embodiments

An embodiment of the present disclosure will be described. Note that the following embodiment is only an exemplary one of various embodiments of the present disclosure and should not be construed as limiting. Rather, the embodiment can be readily modified, combined, or replaced in various manners depending on design choice or any other factor without departing from the true spirit and scope of the present disclosure.

### (1) Overview

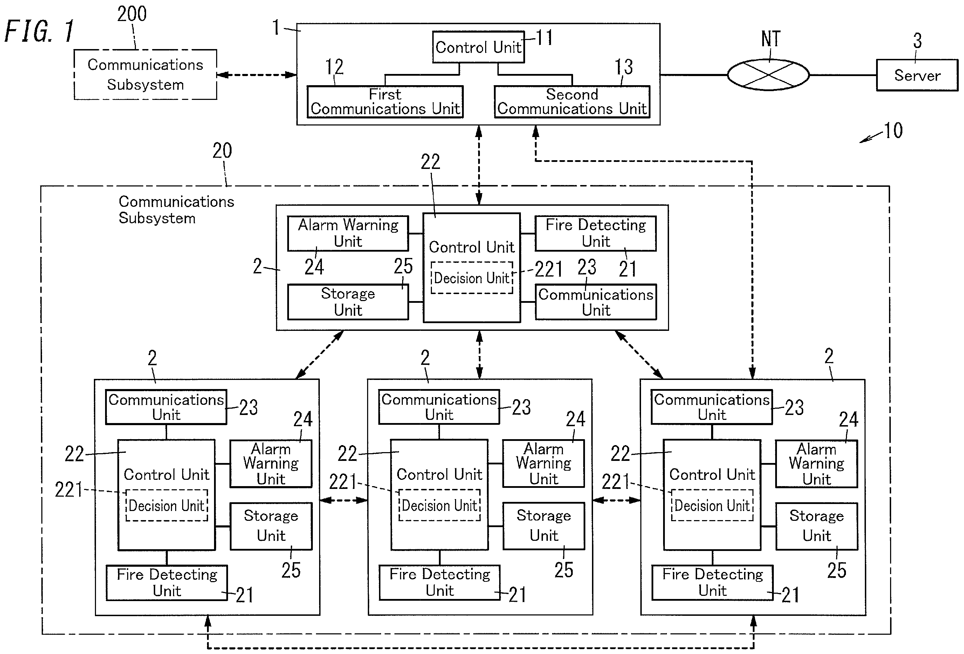

FIG. 1 is a block diagram illustrating a communications system 10 according to an exemplary embodiment. The communications system 10 according to this embodiment includes a master device (serving as a first device) 1 and a communications subsystem 20. The communications subsystem 20 includes a plurality of (e.g., four in the example illustrated in FIG. 1) communications devices 2 (serving as second devices). The communications subsystem 20 may include up to fifteen communications devices 2, for example.

The master device 1 is configured to be able to communicate wirelessly with each of the plurality of communications devices 2. Each of the communications devices 2 is also configured to be able to communicate wirelessly with the other communications devices 2. In FIG. 1, the dotted arrows indicate transmission paths of wireless signals. Note that in FIG. 1, dotted arrows are shown between two out of the four communications devices 2 and the master device 1 with dotted arrows not shown between the other two communications devices 2 and the master device 1.

In the following description, the communications system 10 is supposed to be used in a single-family dwelling house as an example. However, this is only an example and should not be construed as limiting. Naturally, the communications system 10 does not have to be used in a single-family dwelling house, but may also be used in any of various other types of buildings including multi-family dwelling houses, offices, and stores.

According to this embodiment, each of the communications devices 2 is configured as a fire alarm device for sounding the alarm on detecting a fire. Upon detecting the outbreak of a fire, each communications device 2 sounds the alarm and sends out a fire warning to the other communications devices 2 and the master device 1. On receiving the fire warning from another communications device 2, each communications device 2 sounds the alarm. On the other hand, upon receipt of the fire warning from the communications device 2, the master device 1 forwards the fire warning to a server 3 over a network NT.

The communications system 10 of this embodiment is configured to allow the master device 1 and the respective communications devices 2 to establish synchronous communication between them. Each of the communications devices 2 is configured to perform intermittent reception of carrying out a signal receiving operation intermittently to reduce the power consumption. Specifically, each communications device 2 performs a first type of intermittent reception of intermittently carrying out a reception operation of receiving a signal from the master device 1 (corresponding to "another type of intermittent reception") and a second type of intermittent reception of intermittently carrying out a reception operation of receiving a signal from another communications device (corresponding to "one type of intermittent reception"). Each communications device 2 transmits a signal to the other communications devices 2 at a timing when each of the other communications devices 2 is carrying out the reception operation as the second type of intermittent reception. The master device 1 transmits a signal to a communications device 2 at a timing when the communications device 2 is carrying out the reception operation as the first type of intermittent reception. Also, the master device 1 transmits a beacon signal, as a synch signal defining the timing at which each communications device 2 is supposed to transmit or receive a signal, to the respective communications devices 2 in regular cycles.

When a timing to transmit a signal to the master device 1 falls within a protection period defined with respect to a timing to carry out the reception operation as the second type of intermittent reception, each communications device 2 puts transmission of the signal to the master device 1 on hold. This reduces the chances of transmission of a signal from one communications device 2 to the master device 1 causing a delay in communication between the one communications device 2 and the other communications devices 2. Specifically, this reduces the chances of causing, when a fire breaks out, for example, a delay in transmission of a fire warning signal from one communications device 2 that has detected the outbreak of the fire to the other communications devices 2.

### (2) Specifics

Next, specifics of the communications system 10 according to this embodiment will be described.

### (2.1) Master device

First of all, the configuration of the master device 1 will be described. The master device 1 is a communications device with the capability of communicating with the respective communications devices 2 and the server 3. The master device 1 is configured to be powered by utility power supply. The master device 1 includes a control unit 11, a first communications unit 12, and a second communications unit 13.

The control unit 11 may be implemented as a microcomputer including a processor and a memory. In other words, the control unit 11 is implemented as a computer system including a processor and a memory. The processor's execution of an appropriate program allows the computer system to function as the control unit 11. The program may be stored in advance in the memory. Alternatively, the program may also be downloaded through a telecommunications line such as the Internet or be distributed after having been recorded in some non-transitory storage medium such as a memory card. Still alternatively, the program may also be downloaded from a server over the Internet via power line communication (PLC) or by wireless communication.

The control unit 11 controls the first communications unit 12 and the second communications unit 13.

The first communications unit 12 is configured to communicate with respective communications devices 2 by transmitting and receiving wireless signals to/from the communications devices 2 via radio waves. The first communications unit 12 includes an antenna, a transmitter circuit, and a receiver circuit. The transmitter circuit modulates data supplied from the control unit 11 into a wireless signal and transmits the wireless signal via the antenna. The receiver circuit demodulates a wireless signal received via the antenna and outputs the demodulated data to the control unit 11. The first communications unit 12 may transmit and receive wireless signals in compliance with the "Specific Low Power Radio Station" standard defined by Article 6(4)(ii) of Regulations for Enforcement of the Radio Act for the country of Japan.

The second communications unit 13 is a communications interface with the ability to communicate with the server 3. The second communications unit 13 may be connected to the network NT (such as the Internet) via a router and a modem, for example, and is configured to communicate with the server 3 over the network NT. The second communications unit 13 transmits the data supplied from the control unit 11 to the server 3. The second communications unit 13 also outputs the data received from the server 3 to the control unit 11. Optionally, the first communications unit 12 and the second communications unit 13 may be formed integrally with each other.

The control unit 11 makes the first communications unit 12 transmit a beacon signal, defining a timing for respective communications devices 2 to transmit and receive signals, to the respective communications devices 2 in predetermined cycles (of, e.g., 60 seconds). Each of the communications devices 2 establishes synchronization with the other communications devices 2 by receiving the beacon signal from the master device 1 and defines the timings to transmit and receive signals with respect to the timing of reception of the beacon signal. That is to say, each communications device 2 defines the timing to carry out the reception operation of receiving a signal from the master device 1 as the first type of intermittent reception and the timing to carry out the reception operation of receiving a signal from another communications device 2 as the second type of intermittent reception with respect to the timing of reception of the beacon signal.

In transmitting a signal to each communications device 2, the control unit 11 makes the first communications unit 12 transmit the signal to the communications device 2 at a timing when the communications device 2 is carrying out the reception operation as the first type of intermittent reception. Also, the control unit 11 and the first communications unit 12 are configured to be ready to receive signals from the respective communications devices 2 at any time, irrespective of the timing of transmission of the beacon signal.

In this embodiment, the control unit 11 makes the first communications unit 12 transmit an information request signal to the respective communications devices 2 in order to check out the statuses of the respective communications devices 2. Specifically, the control unit 11 makes the first communications unit 12 transmit the information request signal to the respective communications devices 2 at regular intervals (e.g., once in every ten minutes) at a timing when the respective communications devices 2 are carrying out the reception operation as the first type of intermittent operation. On receiving the information request signal from the master device 1, each communications device 2 transmits a signal carrying the information requested (such as error information or information about the battery level) to the master device 1.

Also, when the first communications unit 12 receives a notification signal with a fire warning message from any communications device 2, the control unit 11 notifies the server 3, via the second communications unit 13, that a fire has broken out.

### (2.2) Communications device

Next, the configuration of the communications devices 2 will be described. Each communications device 2 is implemented as a fire alarm device with the capability of sounding the fire alarm when detecting the outbreak of a fire and the capability of communicating with the master device 1 and the other communications devices 2. The communications device 2 may be installed, for example, on the ceiling of a room or hallway of a dwelling house (which may be a single-family or multi-family dwelling house). The communications device 2 is configured to be powered by a battery such as a dry battery.

The communications device 2 includes a fire detecting unit 21, a control unit 22, a communications unit 23, and an alarm warning unit 24.

The fire detecting unit 21 is configured to detect smoke produced by a fire and vary the detected quantity (such as a voltage value) according to the amount (e.g., concentration) of the smoke produced. Examples of smoke detection methods include a photoelectric one. The photoelectric smoke detection method is a method of detecting smoke produced by making a photodetector detect scattering light, which has been produced by reflection of a light beam emitted from a light-emitting element, from particles of the smoke. Naturally, the fire detecting unit 21 may also be configured to detect the outbreak of a fire by a thermal method, i.e., based on the quantity of heat generated by the fire. In any case, the fire detecting unit 21 compares the detected quantity with a threshold value, which has been set in advance by the fire detecting unit 21, and determines that a fire has broken out, when finding the detected quantity greater than the threshold value.

The control unit 22 may be implemented as a microcomputer including a processor and a memory, for example. In other words, the control unit 22 is implemented as a computer system including a processor and a memory. The processor's execution of an appropriate program allows the computer system to function as the control unit 22. The program may be stored in advance in the memory. Alternatively, the program may also be downloaded through a telecommunications line such as the Internet or be distributed after having been recorded in some non-transitory storage medium such as a memory card. Still alternatively, the program may also be downloaded from a server by wireless communication. The control unit 22 controls the communications unit 23 and the alarm warning unit 24.

The communications unit 23 is configured to communicate with the master device 1 and the other communications devices 2 by transmitting and receiving wireless signals to/from the master device 1 and the other communications devices 2 via radio waves. The communications unit 23 includes an antenna, a transmitter circuit, and a receiver circuit. The transmitter circuit modulates data supplied from the control unit 22 into a wireless signal and transmits the wireless signal via the antenna. The receiver circuit demodulates a wireless signal received via the antenna and outputs the demodulated data to the control unit 22. The communications unit 23 may transmit and receive wireless signals in compliance with, for example, the "Security Radio Equipment for Low Power Radio Station" standard defined in Article 6(4)(iii) of the Regulations for Enforcement of the Radio Act for the country of Japan. Note that a communications protocol compliant with the law of the applicable country is adopted for the communications unit 23.

The alarm warning unit 24 includes a buzzer for emitting a buzz specified by the control unit 22 and a loudspeaker for emitting a voice warning specified by the control unit 22.

The communications protocol applied to the communication between the master device 1 and the communications devices 2 and the communications protocol applied to the communication between the communications devices 2 themselves are different from each other. Thus, the control unit 22 makes the communications unit 23 perform the intermittent reception (which is either the first type of intermittent reception or the second type of intermittent reception) while changing the protocols from one into the other.

The control unit 22 establishes synchronization by having the communications unit 23 receive the beacon signal from the master device 1 and defines the timings for the communications unit 23 to transmit and receive signals with respect to the timing of reception of the beacon signal. Specifically, the control unit 22 defines the timing to carry out the reception operation of receiving a signal from the master device 1 as the first type of intermittent reception with respect to the timing when the communications unit 23 receives the beacon signal. In addition, the control unit 22 also defines the timing to carry out the reception operation of receiving a signal from another communications device 2 as the second type of intermittent reception with respect to the timing when the communications unit 23 receives the beacon signal. The interval at which the reception operation is carried out as the first type of intermittent reception will be hereinafter referred to as a "first interval T1," and the interval at which the reception operation is carried out as the second type of intermittent reception will be hereinafter referred to as a "second interval T2." The first interval T1 and the second interval T2 have mutually different time lengths. Specifically, the first interval T1 may be four seconds, for example, and the second interval T2 may be ten seconds, for example. Note that these time lengths of the first and second intervals T1 and T2 are only examples, and may be changed into any other values. Optionally, the first interval T1 and the second interval T2 may have the same time length as well.

In making the communications unit 23 transmit a signal to the other communications devices 2, the control unit 22 makes the communications unit 23 transmit the signal at a timing when each of the other communications devices 2 is carrying out the reception operation as the second type of intermittent reception. On the other hand, in making the communications unit 23 transmit a signal to the master device 1, the control unit 22 makes the communications unit 23 transmit the signal regardless of the timing when the communications unit 23 has received the beacon signal, because the master device 1 is configured to be ready to receive signals from the respective communications devices 2 at any time.

The control unit 22 sends out, upon detection of a fire by the fire detecting unit 21, a fire warning by controlling the alarm warning unit 24. As used herein, the "fire warning" is an early warning alerting residents or any other group of people to the outbreak of the fire. Specifically, the control unit 22 may either make the buzzer of the alarm warning unit 24 sound a buzz or have a verbal warning message such as "Fire! Fire!" announced through the loudspeaker of the alarm warning unit 24 when the fire detecting unit 21 detects the outbreak of a fire.

In addition, the control unit 22 transmits, when the fire detecting unit 21 detects a fire, a signal to the master device 1 and the other communications devices 2 by controlling the communications unit 23. Specifically, first of all, the control unit 22 makes, when the fire detecting unit 21 detects a fire, the communications unit 23 transmit a notification signal, including a fire warning message indicating that a fire has broken out, to the master device 1. Next, at a timing when the other communications devices 2 are carrying out a reception operation as the second type of intermittent reception, the control unit 22 makes the communications unit 23 transmit a coordination signal, including the fire warning message, to the other communications devices 2. In addition, the control unit 22 also makes the communications unit 23 transmit the coordination signal continuously to allow the other communications devices 2 to receive the coordination signal readily while performing the second type of intermittent reception.

When the communications unit 23 receives the coordination signal from another communications device 2 as the second type of intermittent reception, the control unit 22 sends out a fire warning by controlling the alarm warning unit 24. That is to say, no sooner at least one of the plurality of communications devices 2 detects a fire than all of those communications devices 2 send out a fire warning in coordination with each other.

In addition, the control unit 22 also makes, when the communications unit 23 receives an information request signal from the master device 1 as the first type of intermittent reception, the communications unit 23 transmit a reception response signal and an information signal. As used herein, the reception response signal is a so-called "acknowledgement (ACK)," which is a reception confirmation signal notifying the sender that the signal has been received safely. The control unit 22 makes, when the communications unit 23 receives the information request signal from the master device 1 safely, the communications unit 23 transmit the reception response signal to the master device 1. Also, as used herein, the "information signal" is a signal carrying information requested by the master device 1. The information signal also includes information about the protocol, a transmission start message indicating information to identify the communications device 2, and other sorts of information. The information signal may have a packet length of, e.g., several ten milliseconds [ms] or less and a communication rate of, e.g., 100 kilobits per second [kbps] or less. Note that the reception response signal includes no information but data as an ACK and has a shorter packet length than the information signal.

The control unit 22 also makes the communications unit 23 transmit a confirmation signal to the other communications devices 2 to confirm the status of communication with the other communications devices 2. Specifically, the control unit 22 makes the communications unit 23 transmit such a confirmation signal at a frequency of approximately 0.9 times a day, for example, to the other communications devices 2 at a timing when the communications devices 2 are carrying out a reception operation as the second type of intermittent reception. It is recommended that the packet length of the confirmation signal be set at a relatively long length to allow the other communications devices 2 to receive the confirmation signal easily as the second type of intermittent reception. In this embodiment, the confirmation signal has a packet length of, e.g., several seconds or less and a communication rate of, e.g., 4.8 kbps. This allows, even when the plurality of communications devices 2 are out of synch with each other, the communications unit 23 to receive a confirmation signal from another communications device 23 more easily. The control unit 22 makes, when the communications unit 23 receives a confirmation signal from another communications device 2 normally, the communications unit 23 transmit an acknowledgement (ACK). Safe reception of the acknowledgement (ACK) at the communications unit 23 from another communications device 2 tells the control unit 22 that the status of communication with the communications device 2 is normal.

In addition, the control unit 22 further makes the communications unit 23 transmit a state signal to the master device 1. If the battery level has become short of the threshold value or if any error has occurred, for example, the control unit 22 makes the communications unit 23 transmit a state signal to master device 1 to notify the master device 1 of such a situation. As used herein, the "error" refers to a state where the communications device 2 has failed to receive an acknowledgement (ACK) from another communications device 2 a number of times in succession.

In this embodiment, of the plurality of (e.g., four in the example illustrated in FIG. 1) communications devices 2 that the communications subsystem 20 includes, one communications device 2 serves as a master device (hereinafter referred to as a "sub-master device") for this communications subsystem 20, while the other three communications devices 2 serve as slave devices (hereinafter referred to as "sub-slave devices") for this communications subsystem 20. The communications device 2 serving as a sub-master device is suitably arranged at such a location as to be able to communicate with all of the other communications devices 2. To allow all of the plurality of communications devices 2 to sound the fire alarm in coordination with each other, the communications device 2 serving as a sub-master device relays, on receiving a coordination signal from another communications device 2 (one of the sub-slave devices), the coordination signal to all of the other communications devices 2 serving as sub-slave devices. This relay of the coordination signal from the communications device 2 serving as a sub-master device to the other communications devices 2 serving as sub-slave devices allows, even when the presence of an obstacle, for example, prevents the communications devices 2 serving as sub-slave devices from communicating with each other normally, all of the plurality of communications devices 2 to sound the fire alarm in coordination with each other.

As described above, the interval (first interval T1) at which reception operation is carried out as the first type of intermittent reception and the interval (second interval T2) at which reception operation is carried out as the second type of intermittent reception have mutually different time lengths. Thus, a timing to carry out the reception operation as the first type of intermittent reception and a timing to carry out the reception operation as the second type of intermittent reception could overlap with each other, or be too close to each other to say the least, on the time axis. Likewise, a timing to transmit a signal from one communications device 2 to the master device 1 is not in synch with the beacon signal, and therefore, the timing to transmit the signal to the master device 1 and a timing to carry out the reception operation as a second type of intermittent reception could also overlap with each other, or be too close to each other to say the least, on the time axis. Consequently, a timing for one communications device 2 to communicate with the master device 1 and a timing for the one communications device 2 to communicate with the other communications devices 2 could overlap with each other, or be too close to each other to say the least, on the time axis. Such a situation would allow the one communications device 2 to communicate with only either the master device 1 or the other communications devices 2, not both of them.

In this case, the coordination signal is transmitted from one communications device 2 to the other communications devices 2 at a timing when the other communications devices 2 are carrying out a reception operation as the second type of intermittent reception. This coordination signal is transmitted to have the alarm warning units 24 of all of the plurality of communications devices 2 send out a fire warning and alert the residents to the outbreak of a fire. Therefore, the coordination signal is more urgent than any other signal to be transmitted by the communications device 2. In other words, the communication between one communications device 2 and the other communications devices 2 has higher priority than the communication between the one communications device 2 and the master device 1. As used herein, the "priority" refers to a degree of priority for determining the priority order of communications.

Each communications device 2 of this embodiment further includes a decision unit 221 and a storage unit 25 to give higher priority to communication with the other communications devices 2 than to communication with the master device 1.

The control unit 22 includes the decision unit 221. In other words, the control unit 22 plays the role as the decision unit 221 by having a program executed by its built-in processor.

The decision unit 221 determines whether or not it is a timing when the communications unit 23 may transmit a signal to the master device 1. Specifically, the decision unit 221 determines whether or not the timing for the communications unit 23 to transmit the signal to the master device 1 falls within a protection period.

As used herein, the "protection period" refers to a period defined with respect to a timing to carry out a reception operation as the second type of intermittent reception. Specifically, the protection period is a period, of which the end point is defined by the timing to carry out the reception operation as the second type of intermittent reception. According to the present invention, the protection period is a period preceding, but ending at, the timing to carry out the reception operation as the second type of intermittent reception.

The length of the protection period is set based on the maximum amount of time required to transmit a signal to the master device 1. Specifically, the protection period is set to be longer than the amount of time it takes to retransmit a signal to the master device 1 an upper limit number of times. On detecting that no acknowledgement (ACK) has returned from the master device 1 in response to a signal transmitted from the communications unit 23 to the master device 1, the control unit 22 makes the communications unit 23 retransmit the signal to the master device 1. The upper limit number of times of signal retransmission may be four times, for example. The length of the protection period is set based on the upper limit number of times of signal retransmission to the master device 1, the interval of the signal retransmission, and the packet length of the signal. That is to say, if the communications unit 23 has started to transmit a signal to the master device 1 before the protection period, the processing of transmitting the signal to the master device 1 will be completed by the timing to carry out the reception operation as the second type of intermittent reception, even though the signal has been retransmitted the upper limit number of times. In other words, if the communications unit 23 started transmitting the signal to the master device 1 within the protection period, the processing of transmitting the signal to the master device 1 could not be completed by the timing to carry out the reception operation as the second type of intermittent reception. In this embodiment, the protection period may have a length of, e.g., 1.5 seconds [s].

On finding the timing to transmit the signal to the master device 1 falling within the protection period, the decision unit 221 determines that it is a timing at which no signals may be transmitted to the mater device 1. On the other hand, on finding the timing to transmit the signal to the master device 1 falling outside of the protection period, the decision unit 221 determines that it is a timing at which the signal may be transmitted to the mater device 1.

If the decision unit 221 has determined that it is a timing at which the signal may be transmitted to the master device 1, then the control unit 22 starts transmitting the signal from the communications unit 23 to the master device 1. On the other hand, if the decision unit 221 has determined that it is a timing at which no signals may be transmitted to the master device 1, then the control unit 22 puts transmission of the signal from the communications unit 23 to the master device 1 on hold. In the latter case, i.e., if the transmission of the signal from the communications unit 23 to the master device 1 is put on hold, the control unit 22 temporarily stores, in the storage unit 25, data about the signal put on hold.

The storage unit 25 may be configured as, for example, a volatile memory such as a random access memory (RAM). The storage unit 25 may serve as a buffer for temporarily storing data about the signal, of which the transmission is currently put on hold by the communications unit 23. Alternatively, the storage unit 25 may also be configured as a nonvolatile memory.

The control unit 22 has the signal put on hold transmitted from the communications unit 23 to the master device 1 at the timing that the decision unit 221 has determined to be a timing at which the signal may be transmitted to the master device 1. That is to say, the control unit 22 has the signal, including the data stored in the storage unit 25, transmitted from the communications unit 23 to the master device 1 at a timing falling outside of the protection period.

It should be noted, in this case, that the signal put on hold, among the signals to be transmitted from the communications device 2 to the master device 1, is a signal including data such as the information signal, for example, and does not include the reception response signal that is an acknowledgement (ACK) notifying the sender of a safe reception of the signal. That is to say, the reception response signal is a signal not to be put on hold, and is transmitted to the master device 1 even within the protection period.

### (2.3) Another communications subsystem

The communications system 10 of this embodiment further includes another communications subsystem 200 of a different type from the communications subsystem 20. The communications subsystem 200 also includes, as well as the communications subsystem 20, a plurality of communications devices. In this communications subsystem 200, however, each communications device includes a carbon monoxide (CO) detecting unit instead of the fire detecting unit 21. That is to say, in this communications subsystem 200, each communications device serves as a CO alarm/detector with the capability of detecting the presence of carbon monoxide. These communications devices (i.e., CO alarms/detectors) may be installed, for example, in a basement, or on the ceiling of a garage, of a single-family dwelling house. However, communications devices of this communications subsystem 200 each have the same configuration as the communications devices 2 of the communications subsystem 20 except the CO detecting unit. Thus, the following description will be focused on the CO detecting unit, and description of the other configurations will be omitted herein.

The CO detecting unit is configured to detect the presence of carbon monoxide and vary the detected quantity (such as a voltage value) according to the amount (e.g., concentration) of the carbon monoxide present. Examples of methods of detecting carbon monoxide include an electrochemical method, a contact burning method, and a semiconductor method. The electrochemical method is a method of detecting the amount of carbon monoxide present by transforming chemical reaction energy, generated by oxidation-reduction reaction, into electrical energy. The contact burning method is a method of detecting the amount of carbon monoxide present by sensing a variation in voltage involved with an increase in the resistance of a detecting element when carbon monoxide burns by reacting to the detecting element. The semiconductor method is a method of detecting the amount of carbon monoxide present by sensing a variation in electric conductivity due to adsorption of a gas onto the surface of a metal-oxide semiconductor. The CO detecting unit compares the detected quantity with a threshold value that has been set in advance by the CO detecting unit, and determines that carbon monoxide should be present when finding the detected quantity greater than the threshold value.

### (3) Exemplary operations

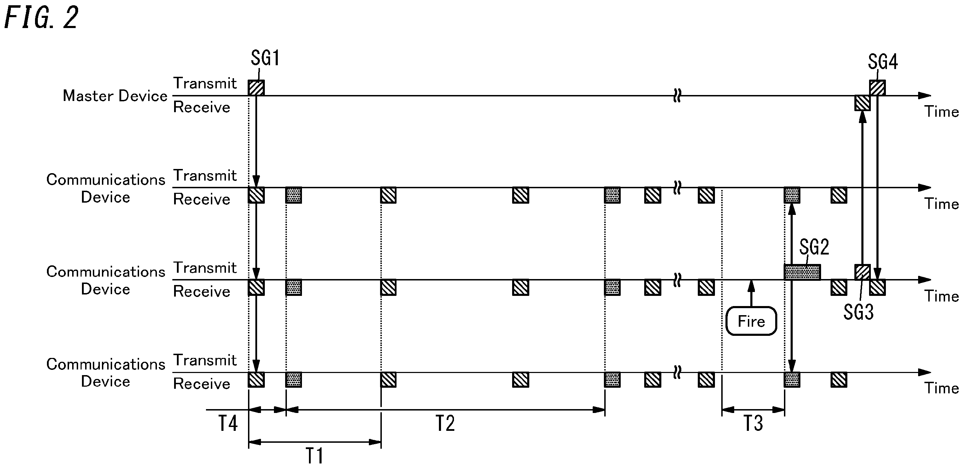

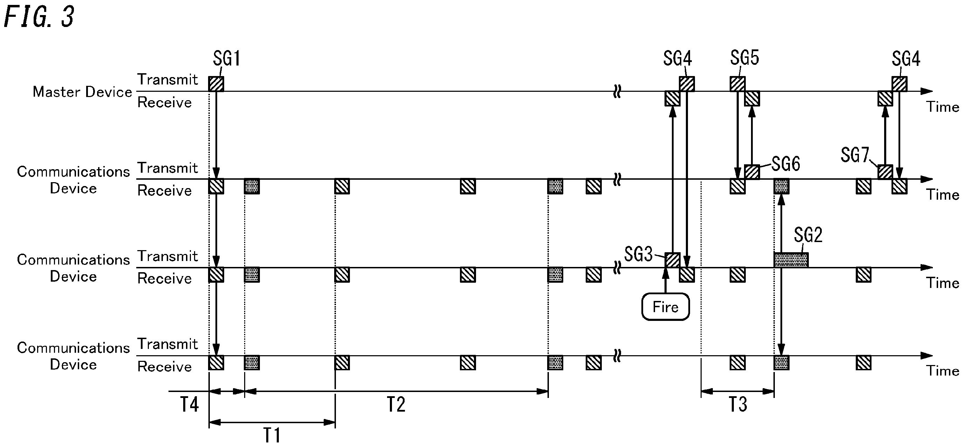

Next, a first exemplary operation and a second exemplary operation of the communications system 10 (or communications devices 2) according to this embodiment will be described with reference to FIGS. 2 and 3. Specifically, communication between a single master device 1 and three communications devices 2 will be described as an example. In the following description, when the three communications devices 2 need to be distinguished from each other, the three communications devices 2 will be designated by the reference numerals 2A, 2B, and 2C, respectively.

Also, in FIGS. 2 and 3, "Transmit" beside "Master Device 1" represents the operation of the transmitter circuit of the first communications unit 12 thereof (where the shadowed square indicates that the transmitter circuit is carrying out a transmission operation). "Receive" beside "Master Device 1" represents the operation of the receiver circuit of the first communications unit 12 thereof (where the shadowed square indicates that the receiver circuit is carrying out a reception operation). On the other hand, "Transmit" beside "Communications Device 2A (2B, or 2C)" represents the operation of the transmitter circuit of the communications unit 23 thereof (where the shadowed square indicates that the transmitter circuit is transmitting a signal to the master device 1 and the dotted square indicates that the transmitter circuit is transmitting a signal to the other communications devices 2). "Receive" beside "Communications Device 2A (2B, or 2C)" represents the operation of the receiver circuit of the communications unit 23 thereof (where the shadowed square indicates that the receiver circuit is receiving a signal from the master device 1 (i.e., carrying out a reception operation as the first type of intermittent reception) and the dotted square indicates that the receiver circuit is receiving a signal from another communications device 2 (i.e., carrying out a reception operation as the second type of intermittent reception).

### (3.1) First exemplary operation

A first exemplary operation of the communications system 10 (communications devices 2) according to this embodiment will be described with reference to FIG. 2.

The master device 1 transmits a beacon signal SG1 in predetermined cycles. The communications devices 2A-2C establish synchronization between them by receiving the beacon signal SG1 from the master device 1 and each define a timing to carry out a reception operation as the first type of intermittent reception and a timing to carry out a reception operation as the second type of intermittent reception with respect to the timing of reception of the beacon signal SG1. In this exemplary operation, the communications devices 2 each carry out the reception operation as the first type of intermittent reception at the first interval T1 with a starting point set at the timing of reception of the beacon signal SG1. In addition, the communications devices 2 each carry out the reception operation as the second type of intermittent reception at the second interval T2 with a starting point set at a point in time when a predetermined amount of time T4 has passed since the timing of reception of the beacon signal SG1.

In this exemplary operation, the communications device 2B detects the outbreak of a fire at a timing falling within the protection period T3. Upon detection of the fire, the communications device 2B makes its alarm warning unit 24 sound the fire alarm. Also, since the timing of fire detection falls within the protection period T3, the communications device 2B puts transmission of the notification signal SG3 to the master device 1 on hold for a while, and transmits the coordination signal SG2 at the timing to carry out the reception operation as the second type of intermittent reception for the first time since the detection of the fire. The other communications devices 2A and 2C each receive the coordination signal SG2 from the communications device 2B by carrying out the reception operation as the second type of intermittent reception and make their alarm warning unit 24 sound the fire alarm. This allows all of these communications devices 2A-2C to sound the fire alarm in coordination with each other.

Then, after having transmitted the coordination signal SG2, the communications device 2B transmits the notification signal SG3, which has been put on hold, to the master device 1 at a timing falling outside of the protection period T3. Upon receiving the notification signal SG3 from the communications device 2B, the master device 1 returns an acknowledgement (ACK) SG4, notifying the sender that the notification signal SG3 has been received safely, to the communications device 2B. In addition, the master device 1 also notifies the server 3, via the second communications unit 13, of the outbreak of the fire (see FIG. 1).

As can be seen, according to this exemplary operation, the communications device 2B, having detected a fire, postpones transmitting the notification signal SG3 to the master device 1 because the timing of fire detection falls within the protection period T3, and instead, transmits the coordination signal SG2 to the other communications devices 2A and 2C preferentially. This reduces a delay in the propagation of the coordination signal SG2 from the communications device 2B to the other communications devices 2A and 2C and allows the residents to be alerted to the outbreak of the fire earlier.

### (3.2) Second exemplary operation

A second exemplary operation of the communications system 10 (communications devices 2) according to this embodiment will be described with reference to FIG. 3. Note that the communications system 10 operates in the same way as in the first exemplary operation (see FIG. 2) before the outbreak of a fire and description thereof will be omitted herein.

In this exemplary operation, the communications device 2B detects the outbreak of a fire at a timing falling outside of the protection period T3. Upon detection of the fire, the communications device 2B makes its alarm warning unit 24 sound the fire alarm immediately. In addition, since the timing of fire detection is outside of the protection period T3, the communications device 2B also transmits the notification signal SG3 to the master device 1. Upon receiving the notification signal SG3 from the communications device 2B, the master device 1 returns an acknowledgement (ACK) SG4, notifying the sender that the notification signal SG3 has been received safely, to the communications device 2B. In addition, the master device 1 also notifies the server 3, via the second communications unit 13, of the outbreak of the fire (see FIG. 1).

Also, according to this exemplary operation, the timing to carry out the reception operation as the first type of intermittent reception falls within the protection period T3, and an information request signal SG5 is transmitted from the master device 1 to the communications device 2A at this timing to carry out the reception operation. Since this timing falls within the protection period T3, the communications device 2A only returns a reception response signal SG6 (ACK), notifying the sender that the information request signal SG5 has been received safely, to the master device 1 and puts transmission of an information signal SG7 to the master device 1 on hold.

Next, the communications device 2B transmits the coordination signal SG2 at the timing to carry out the reception operation as the second type of intermittent reception for the first time since the detection of the fire. The other communications devices 2A and 2B each receive the coordination signal SG2 from the communications device 2B by carrying out a reception operation as the second type of intermittent reception and make their alarm warning unit 24 sound the fire alarm. This allows the communications devices 2A-2C to sound the fire alarm in coordination with each other.

Then, the communications device 2A transmits the information signal SG7, which has been put on hold, to the master device 1 at a timing falling outside of the protection period T3. Upon receiving the information signal SG7 from the communications device 2A, the master device 1 returns an acknowledgement (ACK) SG4, notifying the sender that the information signal SG7 has been received safely, to the communications device 2A.

As can be seen, according to this exemplary operation, on receiving a signal requiring a reply (i.e., the information request signal SG5) from the master device 1 within the protection period T3, the communications device 2A returns only the reception response signal SG6 as an ACK and postpones transmitting the information signal SG7. This allows the communications device 2A to carry out the reception operation as the second type of intermittent reception without canceling it and to receive the coordination signal SG2 from the communications device 2B. That is to say, this reduces a delay in the propagation of the coordination signal SG2 from the communications device 2B to the other communications devices 2A and 2C and allows the residents to be alerted to the outbreak of the fire earlier.

### (4) Advantages

Next, advantages of the communications device 2 according to this embodiment will be described.

As described above, each communications device 2 according to this embodiment is configured to put transmission of a signal to the master device 1 on hold within the protection period preceding a timing to carry out the reception operation as the second type of intermittent reception in order to communicate with the other communications devices 2. This reduces the chances of the communications device's 2 signal transmission to the master device 1 causing a delay in the communication of high priority with the other communications devices. This allows, when a fire breaks out, for example, each communications device 2 to perform highly urgent transmission or reception of a coordination signal without causing a delay. Consequently, this allows the fire alarm to be sounded as an even earlier warning in coordination with each other and also allows the residents to be alerted to the outbreak of the fire even earlier.

In addition, the communications device 2 transmits a signal, which has been put on hold, to the master device 1 at a timing falling outside of the protection period. That is to say, when it is within the protection period, the communications device 2 gives higher priority to communication with the other communications devices 2 and postpones signal transmission to the master device 1 until a timing falling outside of the protection period. This allows the communications device 2 to convey critical information to the master device 1 without cancelling the transmission of the signal to the master device 1.

Furthermore, the length of the protection period is set based on the maximum amount of time it may take for the communications device 2 to transmit the signal to the master device 1. Therefore, even if it has taken the maximum amount of time for the communications device 2 to transmit the signal to the master device 1, the communications device 2 is still allowed to communicate with the other communications devices 2 normally.

Besides, among various signals to be transmitted from the communications device 2 to the master device 1, the signal to be put on hold is a signal including data such as an information signal and does not include any reception response signal, which is an acknowledgement (ACK) notifying the sender that the signal has been received safely. That is to say, the reception response signal is a signal not to be put on hold and is transmitted to the master device 1 even at a timing falling within the protection period. This reduces the chances of the master device's 1 failure to receive the reception response signal (ACK) from the communications device 2 involving retransmission of the signal or causing a timeout, for example.

### (5) Variations

Note that the embodiment described above is only an exemplary one of various embodiments of the present disclosure and should not be construed as limiting. Rather, the embodiment can be readily modified, combined, or replaced in various manners depending on design choice or any other factor without departing from the true spirit and scope of the present disclosure.

Next, numerous variations of the communications device according to this embodiment will be described. Note that the variations to be described below may be combined with each other as appropriate.

### (5.1) First variation

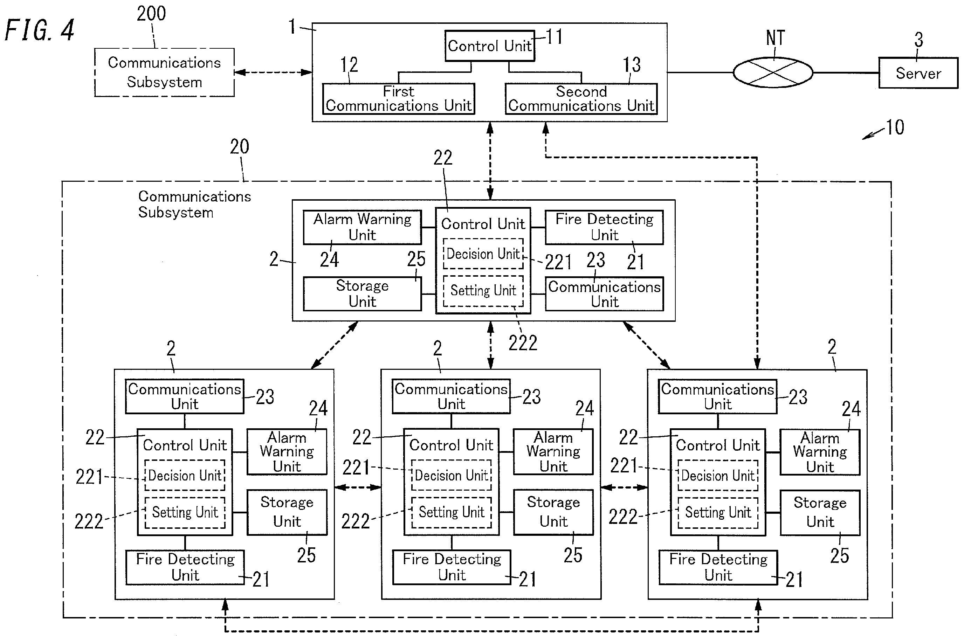

FIG. 4 is a block diagram illustrating communications devices 2 according to a first variation. Each communications device 2 according to this variation further includes a setting unit 222.

The control unit 22 of each communications device 2 performs the function of the setting unit 222 by making its processor execute a program. The setting unit 222 changes the length of the protection period depending on the communication status of the communications unit 23.

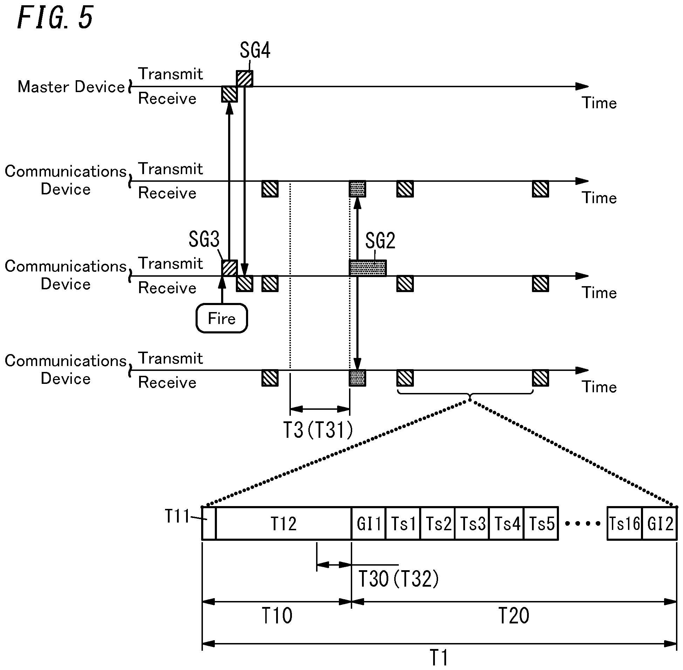

The communication status of the communications unit 23 changes depending on whether or not any fire has broken out. Specifically, when the communications unit 23 transmits or receives the coordination signal to make all of the communications devices 2 sound the fire alarm in coordination with each other, the control unit 22 makes the communications unit 23 carry out time division multiple access (TDMA) communication (see FIG. 5). This allows the communications device 2 to communicate with the other communications devices 2. When the communications unit 23 carries out the TDMA communication, the setting unit 222 shortens the protection period.

Next, it will be described in further detail how the control unit 22 controls the communications unit 23.

The control unit 22 determines, on finding that the fire detecting unit 21 has detected no fire or that the communications unit 23 has received no coordination signals SG2 from any other communications device 2, that no fire has broken out. In that case, the control unit 22 makes the communications unit 23 carry out the reception operation of receiving a signal from another communications device 2 at the second interval T2 as described above (see FIGS. 2 and 3).

On the other hand, the control unit 22 starts, as soon as the fire detecting unit 21 detects the outbreak of a fire, transmitting the coordination signal at a timing when the other communications devices 2 are carrying out the reception operation as the second type of intermittent reception. The control unit 22 makes the communications unit 23 transmit the coordination signal continuously until the other communications devices 2 receive the coordination signal. In other words, the coordination signal is transmitted continuously until all of the communications devices 2 in the communication subsystem 20 sound the fire alarm in coordination with each other. Note that while the coordination signal is being transmitted, the reception operation as the first type of intermittent reception is skipped.

Also, the control unit 22 of each communications device 2 makes, when all of the communications devices 2 sound the fire alarm in coordination with each other, the communications unit 23 carry out the TDMA communication. Specifically, after the fire alarm has been sounded in coordination with each other, part of the period between the reception operations as the first type of intermittent receptions is allocated to the TDMA communication between the communications devices 2 themselves. As shown in FIG. 5, after the fire alarm has been sounded in coordination with each other, the period between the reception operations as the first type of intermittent receptions is divided into a first period T10 in which any of the communications devices 2 communicates with the master device 1 and a second period T20 in which the communications devices 2 carry out the TDMA communication between themselves. The first period T10 may have a time length of 1.3 seconds [s], for example, and the second period T20 may have a time length of 2.7 seconds [s], for example.

The first period T10 is subdivided into a reception subperiod T11 and a transmission/reception subperiod T12. The reception subperiod T11 is a period in which any of the communications devices 2 receives a signal from the master device 1. That is to say, the reception operation as the first type of intermittent reception is carried out during this reception subperiod T11. The reception subperiod T11 may have a time length of 20 milliseconds [ms], for example. The transmission/reception subperiod T12 is a period in which signals are transmitted and received between the communications devices 2 and the master device 1. The transmission/reception subperiod T12 may have a time length of 1.28 seconds [s], for example.

The second period T20 is subdivided into two guard subperiods GI1 and GI2 and first to sixteenth time slots Ts1-Ts16. The guard subperiods GI1 and GI2 may each have a time length of 100 milliseconds [ms], for example. The first time slot Ts1 may have a time length of 100 milliseconds [ms], for example, and the second to sixteenth time slots Ts2-Ts16 may each have a time length of 160 milliseconds [ms], for example.

The guard subperiods GI1 and GI2 are periods provided to avoid interference between data. The guard subperiod GI1 is the first subperiod of the second period T20, while the guard subperiod GI2 is the last subperiod of the second period T20. The first to sixteenth time slots Ts1-Ts16 are respectively allocated to fifteen communications devices 2, the number of which is the upper limit of communications devices 2 to be provided for the communications subsystem 20, and the master device 1. The first time slot Ts1 is allocated to one, serving as a sub-master device, of the plurality of communications devices 2 that the communications subsystem 20 has. The second time slot Ts2 is an expansion time slot for the first time slot Ts1 and may be allocated to the communications device 2 serving as a sub-master device, for example. The third to sixteenth time slots Ts3-Ts16 are respectively allocated to ones, serving as sub-slave devices, of the plurality of communications devices 2 that the communications subsystem 20 has.

Each communications device 2 communicates with the other communications devices 2 and the master device 1 by transmitting a signal to a time slot allocated to itself (i.e., to the communications device 2 itself). Therefore, each communications device 2 carries out a reception operation of receiving a signal from another communications device 2 during the second period T20. The second period T20 is a part of the period between reception operations as the first type of intermittent reception. That is to say, each communications device 2 intermittently carries out the reception operation of receiving a signal from another communications device 2 at as long an interval as the first interval T1 between the reception operations as the first type of intermittent reception. In other words, each communications device 2 carries out, after the fire alarm has been sounded in coordination with each other, the reception operation as the second type of intermittent reception at as long an interval as the first interval T1 between the reception operations as the first type of intermittent reception. After the fire alarm has been sounded in coordination with each other, the protection period becomes a period based on the second period T20.

Also, after the fire alarm has been sounded in coordination with each other, the TDMA communication is carried out, and therefore, the period in which each communications device 2 communicates with the master device 1 (i.e., the transmission/reception subperiod T12) is limited. Thus, after the fire alarm has been sounded in coordination with each other, a communications device 2, having failed to transmit a signal to the master device 1 (i.e., has not received any ACK from the master device 1), does not retransmit the same signal to the master device 1 but retries transmitting the signal in the next transmission/reception subperiod T12. That is to say, after the fire alarm has been sounded in coordination with each other, the maximum amount of time it takes to transmit a signal to the master device 1 shortens. Thus, after the communications unit 23 has transmitted or received the coordination signal SG2 to have the fire alarm sounded in coordination with each other, the setting unit 222 shortens the length of the protection period T3 from a first time length T31 (of, e.g., 1.5 seconds [s]) to a second time length T32 (of, e.g., 250 milliseconds [ms]). The decision unit 221 determines, if the timing to transmit a signal to the master device 1 falls within the protection period T3 (with the second time length T32) preceding the second period T20, that it is a timing at which no signals may be transmitted to the master device 1.

Also, each communications device 2 stops, on receiving a stop signal from the master devices 1, sounding the fire alarm. To stop the fire alarm that has been sounded in coordination with each other, the master device 1 transmits the stop signal to each communications device 2 at a timing when the communications device 2 is carrying out a reception operation as the first type of intermittent reception (i.e., during the reception subperiod T11).

Alternatively, any of the communications devices 2 may transmit the stop signal. For example, when the fire detecting unit 21 changes from a fire detecting state into a non-detecting state, one of the communications devices 2 may transmit the stop signal to the other communications devices 2. Also, a communications device 2, serving as a sub-master device, relays, on receiving the stop signal from any other communications device 2 (serving as a sub-slave device), the stop signal to all of the other communications devices 2 (sub-slave devices). This allows all of the plurality of communications devices 2 to stop sounding the fire alarm in coordination with each other. In addition, the communications device 2 transmits the stop signal to the master device 1 at a timing during the transmission/reception subperiod T12.

### (5.1.1) Exemplary operation

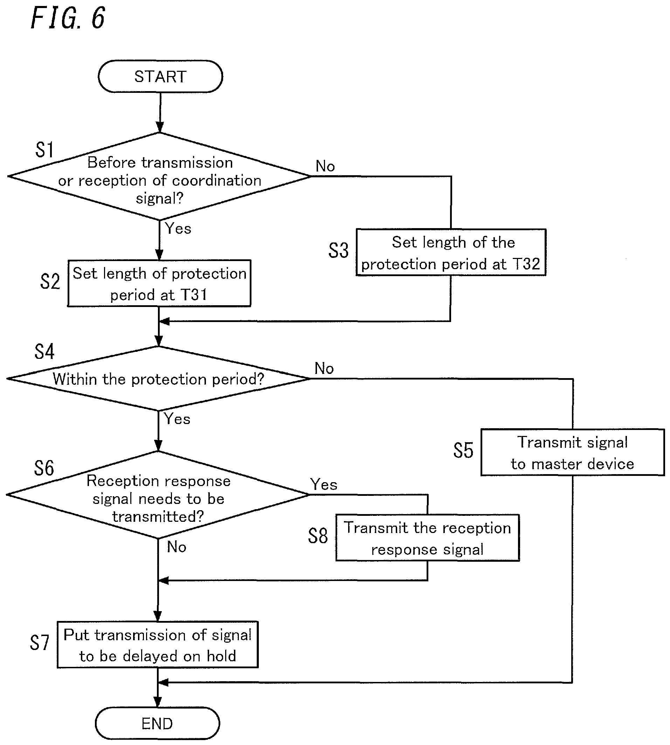

Next, an exemplary operation of each communications device 2 according to this variation will be described with reference to FIG. 6. This exemplary operation is performed when the communications device 2 transmits a signal to the master device 1.

Suppose the fire detecting unit's 21 detecting a fire, reception of the information request signal from the master device 1, or any other event requires the communications device 2 to transmit a signal to the master device 1.

First, the setting unit 222 determines, in Step S1, whether or not the current timing, i.e., the timing to transmit a signal to the master device 1, is before the transmission or reception of the coordination signal. If the timing to transmit a signal to the master device 1 is before the transmission or reception of the coordination signal (i.e., if the answer is YES in Step S1), the setting unit 222 sets, in Step S2, the length of the protection period T3 at the first time length T31. On the other hand, if the timing to transmit a signal to the master device 1 is after the transmission or reception of the coordination signal (i.e., if the answer is NO in Step S1), then the setting unit 222 sets, in Step S3, the length of the protection period T3 at the second time length T32, which is shorter than the first time length T31, because the maximum amount of time it takes to transmit the signal to the master device 1 shortens.

Next, the decision unit 221 determines, in Step S4, whether or not the timing to transmit the signal to the master device 1 falls within the protection period set by the setting unit 222. If the timing to transmit the signal to the master device 1 falls outside of the protection period (i.e., if the answer is NO in Step S4), the control unit 22 makes, in Step S5, the communications unit 23 transmit the signal to the master device 1. On the other hand, if the timing to transmit the signal to the master device 1 falls within the protection period (i.e., if the answer is YES in Step S4), then the control unit 22 determines, in Step S6, whether or not a reception response signal needs to be transmitted.

On receiving a signal (such as the information request signal) from the master device 1, the communications device 2 needs to transmit the reception response signal. Meanwhile, in transmitting a signal (such as a notification signal) by itself (or spontaneously), the communications device 2 need not transmit the reception response signal.

If no reception response signals need to be transmitted (i.e., if the answer is NO in Step S6), then the control unit 22 makes, in Step S7, the communications unit 23 put transmission of a signal to be delayed (such as an information signal) to the master device 1 on hold. On the other hand, if the reception response signal needs to be transmitted (i.e., if the answer is YES in Step S6), then the control unit 22 makes, in Step S8, the communications unit 23 transmit the reception response signal, which need not be delayed, to the master device 1 even within the protection period and put, in Step S7, transmission of a signal to be delayed (such as the information signal) on hold.

Furthermore, the control unit 22 makes the communications unit 23 transmit the signal that has been put on hold to the master device 1 at a timing outside of the protection period.

As can be seen, the communications device 2 according to this variation changes the length of the protection period depending on the communication status of the communications unit 23. This prevents the protection period from becoming unnecessarily long, thus reducing harmful effects on the communication with the master device 1 and thereby allowing the communications device 2 to communicate with the master device 1 normally.

### (5.2) Other variations

Next, other variations of the communications device 2 and communications system 10 according to this embodiment will be enumerated.

In the embodiments described above, the master device 1 transmits, to each communications device 2, a beacon signal as a synch signal defining a timing for the communications device 2 to transmit or receive a signal. However, this is only an example and should not be construed as limiting. Alternatively, a communications device 2 serving as a sub-master device may transmit the beacon signal as a synch signal to the other communications devices 2 (serving as sub-slave devices). In that case, each communications device 2 may perform intermittent reception of intermittently carrying out a reception operation of receiving a signal from another communications device 2 with respect to the timing of reception (or transmission) of the beacon signal.

Also, although the communications devices 2 are implemented as fire alarm devices in the embodiments described above, the communications devices 2 do not have to be fire alarm devices but may also be any other type of devices.

Furthermore, in the embodiments described above, each communications device 2 is configured to communicate with the other communications devices 2, each having the same configuration as itself, as second devices. However, this is only an example and should not be construed as limiting. Alternatively, each communications device 2 may also communicate with a device having a different configuration from itself as a second device.

Furthermore, in the embodiment described above, the communications subsystem 20 is made up of only fire alarm devices. However, this is only an example and should not be construed as limiting. Alternatively, the communications subsystem 20 may include not only fire alarm devices but also CO detectors, each having a CO detecting unit, as the communications devices 2. Still alternatively, each communications device 2 may also include both a fire detecting unit 21 and a CO detecting unit alike.

Optionally, the master device 1 may also be configured to control a plurality of devices that form different systems (such as the communications subsystems 20 and 200) such that these different systems (such as the communications subsystems 20 and 200) operate in coordination with each other. For example, if the master device 1 has received a notification signal, alerting the master device 1 to the outbreak of a fire, from a communications device (such as a fire alarm device) 2, the master device 1 instructs communications devices (such as CO detectors) forming the communications subsystem 200 to sound the CO alarm.

### Reference Signs List

- 1: Master Device (First Device)
- 10: Communications System
- 2: Communications Device (Second Device)
- 23: Communications Unit
- 20: Communications Subsystem

## Claims

1. A communications device (2) comprising
a communications unit (23) configured to perform transmission of a signal (SG3) to a first device (1) and one type of intermittent reception of intermittently carrying out a reception operation of receiving a signal (SG2) from a second device (2),
the communications unit (23) being configured to, when a timing to transmit the signal (SG3) to the first device (1) falls within a protection period (T3) defined with respect to a timing to carry out the reception operation, put the transmission of the signal (SG3) to the first device (1) on hold, wherein
the protection period (T3) is a period preceding, but ending at, the timing to carry out the reception operation as the one type of intermittent reception.

2. The communications device (2) of claim 1, wherein
communication with the first device (1) has lower priority than communication with the second device (2).

3. The communications device (2) of claim 1 or 2, wherein
the communications unit (23) performs a first type of intermittent reception and a second type of intermittent reception,
the second type of intermittent reception is the one type of intermittent reception,
the first type of intermittent reception is a different type of intermittent reception of intermittently carrying out a reception operation of receiving a signal (SG1) from the first device (1), and
an interval at which the reception operation is carried out as the first type of intermittent reception is different from an interval at which the reception operation is carried out as the second type of intermittent reception.

4. The communications device (2) of any one of claims 1 to 3, wherein
the communications unit (23) transmits the signal (SG3), of which the transmission has been put on hold, to the first device (1) at a timing falling outside of the protection period (T3).

5. The communications device (2) of any one of claims 1 to 4, wherein
the protection period (T3) has its length determined by a maximum amount of time required to transmit the signal (SG3) to the first device (1).

6. The communications device (2) of any one of claims 1 to 5, wherein
the communications unit (23) transmits, upon receiving a signal (SG5) from the first device (1) during the protection period (T3), a reception response signal (SG6) to the first device (1), and
transmission of the reception response signal (SG6) does not have to be put on hold and the reception response signal (SG6) indicates a safe receipt of the signal (SG5) from the first device (1).

7. The communications device (2) of any one of claims 1 to 6, wherein
the protection period (T3) has its length changed depending on a communication status of the communications unit (23).

8. A communications subsystem (20) comprising
a plurality of the communications devices (2) of any one of claims 1 to 7,
each of the plurality of communications devices (2) communicating with another one of the plurality of communications devices (2) that serves as the second device (2).

9. A communications system (10) comprising
the communications subsystem (20) of claim 8; and
a master device (1) serving as the first device (1).

## Patentansprüche

1. Kommunikationsvorrichtung (2), umfassend
eine Kommunikationseinheit (23), die konfiguriert ist, um die Übertragung eines Signals (SG3) an eine erste Vorrichtung (1) und eine Art von intermittierendem Empfang des intermittierenden Ausführens eines Empfangsvorgangs des Empfangens eines Signals (SG2) von einer zweiten Vorrichtung (2) durchzuführen,
wobei die Kommunikationseinheit (23) konfiguriert ist, um, wenn ein Zeitpunkt zum Übertragen des Signals (SG3) an die erste Vorrichtung (1) in eine Schutzperiode (T3) fällt, die in Bezug auf einen Zeitpunkt zum Ausführen des Empfangsvorgangs definiert ist, die Übertragung des Signals (SG3) an die erste Vorrichtung (1) aufzuschieben, wobei
die Schutzperiode (T3) eine Periode ist, die dem Zeitpunkt zum Ausführen des Empfangsvorgangs als die eine Art von intermittierendem Empfang vorausgeht, aber zu diesem Zeitpunkt endet.

2. Kommunikationsvorrichtung (2) nach Anspruch 1, wobei
die Kommunikation mit der ersten Vorrichtung (1) eine niedrigere Priorität aufweist als die Kommunikation mit der zweiten Vorrichtung (2).

3. Kommunikationsvorrichtung (2) nach Anspruch 1 oder 2, wobei
die Kommunikationseinheit (23) eine erste Art von intermittierendem Empfang und eine zweite Art von intermittierendem Empfang durchführt,
die zweite Art von intermittierendem Empfang die eine Art von intermittierendem Empfang ist,
die erste Art von intermittierendem Empfang eine andere Art von intermittierendem Empfang des intermittierenden Ausführens eines Empfangsvorgangs des Empfangens eines Signals (SG1) von der ersten Vorrichtung (1) ist, und
ein Intervall, in dem der Empfangsvorgang als die erste Art von intermittierendem Empfang ausgeführt wird, sich von einem Intervall, in dem der Empfangsvorgang als die zweite Art von intermittierendem Empfang ausgeführt wird, unterscheidet.

4. Kommunikationsvorrichtung (2) nach einem der Ansprüche 1 bis 3, wobei
die Kommunikationseinheit (23) das Signal (SG3), dessen Übertragung aufgeschoben wurde, an die erste Vorrichtung (1) zu einem Zeitpunkt überträgt, der außerhalb der Schutzperiode (T3) fällt.

5. Kommunikationsvorrichtung (2) nach einem der Ansprüche 1 bis 4, wobei
die Schutzperiode (T3) ihre Länge aufweist, die durch eine maximale Zeitdauer bestimmt wird, die erforderlich ist, um das Signal (SG3) an die erste Vorrichtung (1) zu übertragen.

6. Kommunikationsvorrichtung (2) nach einem der Ansprüche 1 bis 5, wobei
die Kommunikationseinheit (23) beim Empfangen eines Signals (SG5) von der ersten Vorrichtung (1) während der Schutzperiode (T3) ein Empfangsantwortsignal (SG6) an die erste Vorrichtung (1) überträgt, und
die Übertragung des Empfangsantwortsignals (SG6) nicht aufgeschoben werden muss und das Empfangsantwortsignal (SG6) einen sicheren Empfang des Signals (SG5) von der ersten Vorrichtung (1) anzeigt.

7. Kommunikationsvorrichtung (2) nach einem der Ansprüche 1 bis 6, wobei
die Schutzperiode (T3) ihre Länge in Abhängigkeit von einem Kommunikationsstatus der Kommunikationseinheit (23) geändert hat.

8. Kommunikations-Subsystem (20), umfassend
mehrere der Kommunikationsvorrichtungen (2) nach einem der Ansprüche 1 bis 7,
wobei jede der mehreren Kommunikationsvorrichtungen (2) mit einer anderen der mehreren Kommunikationsvorrichtungen (2) kommuniziert, die als die zweite Vorrichtung (2) dient.

9. Kommunikationssystem (10), umfassend
das Kommunikations-Subsystem (20) nach Anspruch 8; und
eine Master-Vorrichtung (1), die als die erste Vorrichtung (1) dient.

## Revendications

1. Dispositif de communication (2) comprenant :
une unité de communication (23) configurée de manière à mettre en œuvre la transmission d'un signal (SG3) à un premier dispositif (1), et un type de réception intermittente consistant à mettre en œuvre, par intermittence, une opération de réception d'un signal (SG2) en provenance d'un second dispositif (2) ;
l'unité de communication (23) étant configurée de manière à, lorsqu'une temporisation pour transmettre le signal (SG3) au premier dispositif (1) relève d'une période de protection (T3) définie par rapport à une temporisation pour mettre en œuvre l'opération de réception, mettre en attente la transmission du signal (SG3) au premier dispositif (1), dans lequel
la période de protection (T3) est une période qui précède, mais qui prend fin à, la temporisation pour mettre en œuvre l'opération de réception en tant que ledit type de réception intermittente.

2. Dispositif de communication (2) selon la revendication 1, dans lequel :
la communication avec le premier dispositif (1) a une priorité inférieure à la communication avec le second dispositif (2).

3. Dispositif de communication (2) selon la revendication 1 ou 2, dans lequel :
l'unité de communication (23) met en œuvre un premier type de réception intermittente et un second type de réception intermittente ;
le second type de réception intermittente correspond audit un type de réception intermittente ;
le premier type de réception intermittente correspond à un type de réception intermittente différent qui consiste à mettre en œuvre, par intermittence, une opération de réception consistant à recevoir un signal (SG1) en provenance du premier dispositif (1) ; et
un intervalle auquel l'opération de réception est mise en œuvre en tant que le premier type de réception intermittente est différent d'un intervalle auquel l'opération de réception est mise en œuvre en tant que le second type de réception intermittente.

4. Dispositif de communication (2) selon l'une quelconque des revendications 1 à 3, dans lequel :
l'unité de communication (23) transmet le signal (SG3), dont la transmission a été mise en attente, au premier dispositif (1), à une temporisation qui tombe en dehors de la période de protection (T3).

5. Dispositif de communication (2) selon l'une quelconque des revendications 1 à 4, dans lequel :
la période de protection (T3) voit sa longueur déterminée par une durée maximale nécessaire pour transmettre le signal (SG3) au premier dispositif (1).

6. Dispositif de communication (2) selon l'une quelconque des revendications 1 à 5, dans lequel :
l'unité de communication (23) transmet, suite à la réception d'un signal (SG5) en provenance du premier dispositif (1) au cours de la période de protection (T3), un signal de réponse de réception (SG6), au premier dispositif (1) ; et
la transmission du signal de réponse de réception (SG6) n'a pas à être mise en attente et le signal de réponse de réception (SG6) indique une réception sûre du signal (SG5) en provenance du premier dispositif (1).

7. Dispositif de communication (2) selon l'une quelconque des revendications 1 à 6, dans lequel :
la période de protection (T3) voit sa longueur modifiée en fonction d'un état de communication de l'unité de communication (23).

8. Sous-système de communication (20), comprenant :
une pluralité de dispositifs de communication (2) selon l'une quelconque des revendications 1 à 7 ;
dans lequel chaque dispositif de la pluralité de dispositifs de communication (2) communique avec un autre dispositif de la pluralité de dispositifs de communication (2) qui fait office de second dispositif (2).

9. Système de communication (10) comprenant :
le sous-système de communication (20) selon la revendication 8 ; et
un dispositif maître (1) faisant office de premier dispositif (1).
